# EUROPÄISCHE PATENTSCHRIFT

(11) **EP 3 759 159 B1**
(45) Veröffentlichungstag und Bekanntmachung des Hinweises auf die Patenterteilung: **03.04.2024**
(21) Anmeldenummer: 20711786.2
(22) Anmeldetag: 17.02.2020
(51) Int. Cl.: C08J 9/00, C08J 9/32, C08K 3/34, C08K 7/22, C08L 33/12

(54) **AUSHÄRTBARE GIESSMASSE ZUR HERSTELLUNG VON KUNSTSTOFFFORMTEILEN**
CURABLE CASTING COMPOUND FOR THE PRODUCTION OF PLASTIC MOLDED PARTS
MATIÈRE À COULER DURCISSABLE POUR FABRIQUER DES PIÈCES MOULÉES EN PLASTIQUE

(30) Priorität: 11.04.2019 DE 102019205279
(43) Veröffentlichungstag der Anmeldung: 06.01.2021
(73) Patentinhaber: BLANCO GmbH + Co KG, 75038 Oberderdingen (DE)
(72) Erfinder: HAJEK, Andreas, 76356 Weingarten (DE); SENK, Benjamin, 74889 Sinsheim (DE); GANSEL, Julia, 76646 Bruchsal (DE)
(74) Vertreter: Ullrich & Naumann PartG mbB
(86) Internationale Anmeldenummer: PCT/DE2020/200012
(87) Internationale Veröffentlichungsnummer: WO 2020/207541

(56) Entgegenhaltungen:
- DE-A1- 19 812 123
- JP-A- 2001 335 382
- US-A- 5 665 785

## Beschreibung

Die Erfindung betrifft eine aushärtbare Gießmasse zur Herstellung von Kunststoffformteilen für den Küchen- und/oder Sanitärbereich, insbesondere von Küchenspülen und Arbeitsplatten für Küchen, umfassend eine Gießmasse mit einer Bindemittelmaterialzusammensetzung und einer Füllstoffmaterialzusammensetzung, wobei die Füllstoffmaterialzusammensetzung zumindest einen ersten Anteil an granularen mineralischen Partikeln aufweist.

Die Erfindung betrifft weiter eine Verwendung einer aushärtbaren Gießmasse.

Die Erfindung betrifft darüber hinaus ein Kunststoffformteil für den Küchen- und/oder Sanitärbereich, insbesondere eine Küchenspüle oder eine Küchenarbeitsplatte, hergestellt unter Verwendung einer aushärtbaren Gießmasse.

Aushärtbare Gießmassen werden zur Herstellung von Kunststoffformteilen, insbesondere im Sanitär- oder Küchenbereich, wie beispielsweise Küchenspülen, Arbeitsplatten, Badewannen, Waschbecken oder dergleichen verwendet. Die aushärtbaren Gießmassen umfassen dabei üblicherweise ein Bindemittelmaterial sowie ein Füllstoffmaterial zur Verbesserung der mechanischen Eigenschaften der Kunststoffformteile, wie dies beispielsweise aus der DE 38 32 351 oder der WO 2005/071000A1 bekannt geworden ist.

Aus der DE 198 12 123 A1 ist zudem eine Gießmasse bekannt geworden, die einen auf Methylmethacrylat basierenden Sirup sowie bis zu 85% eines anorganischen Füllstoffes, bezogen auf die Gießmasse, umfasst sowie deformierbare, treibmittelgefüllte Mikrohohlkügelchen mit einer in Methylmethacrylat im wesentlichen unlöslichen Kunststoffwandung, wobei der Volumenanteil der Mikrohohlkügelchen am Gesamtvolumen der Gießmasse im Bereich von 5 bis 50 Vol.-% liegt.

Darüber hinaus ist aus der JP 2001-335382 A eine polymerisierbare Komponente mit 10 bis 65 Masse-% Methylmethacrylat als Hauptkomponente, 30 bis 85 Masse-% anorganischem Füllstoff, einem spezifischen Gewicht von 0,05 bis 0,7 und einer durchschnittlichen Teilchengröße von 10 bis 300 µm bekannt geworden. Weiter ist aus der US 5,665,785 A ein Verfahren zur Herstellung mikrozellulärer Strukturen mit im Wesentlichen nichtzellulären Oberflächen bekannt geworden. Derartige aushärtbare Gießmassen weisen jedoch den Nachteil auf, dass Oberflächen damit hergestellter Kunststoffformteile nur schlecht zu reinigen sind, mithin also eine schlechte Reinigbarkeit der Oberfläche aufweisen. Hierzu ist es aus der EP 1 240 221 B1 bekannt geworden, einen Anteil partikelförmiges, hydrophobes und/oder oleophobes Kunststoffmaterial der aushärtbaren Gießmasse zuzusetzen. Aus der EP 1 487 906 A1 ist es weiterhin bekannt geworden, eine hydrophobe Monomerkomponente zuzusetzen, die mindestens ein mit einer ungesättigten Gruppe funktionalisiertes Organosiloxan umfasst.

Eine Aufgabe der vorliegenden Erfindung ist es daher eine alternative aushärtbare Gießmasse sowie daraus hergestellte Kunststoffformteile bereitzustellen, die eine mindestens vergleichbare Reinigungsfreundlichkeit bzw. Reinigbarkeit aufweisen. Die vorliegende Erfindung löst die Aufgabe bei einer aushärtbaren Gießmasse zur Herstellung von Kunststoffformteilen für den Küchen- und/oder Sanitärbereich, insbesondere von Küchenspülen und Arbeitsplatten für Küchen, umfassend eine Gießmasse mit einer Bindemittelmaterialzusammensetzung und einer Füllstoffmaterialzusammensetzung, wobei die Füllstoffmaterialzusammensetzung zumindest einen ersten Anteil an granularen mineralischen Partikeln aufweist, dadurch, dass die Füllstoffmaterialzusammensetzung einen zweiten Anteil an expandierbaren Mikrozellen von mindestens 0,10 Gewichtsprozent und weniger als 0,175 Gewichtsprozent bezogen auf die Gießmasse aufweist, und wobei die Füllstoffmaterialzusammensetzung einen dritten Anteil einer Peroxidmischung aufweist und wobei die Bindemittelmaterialzusammensetzung zumindest einen Anteil eines flüssigen monomeren Acrylats aufweist und wobei die aushärtbare Gießmasse zumindest zwei unterschiedliche Arten granularer mineralischer Partikel aufweist, und wobei das Verhältnis des Gewichtsanteils an expandierbaren Mikrozellen und des Gewichtsanteils zumindest einer Art der zumindest zwei Arten granularischer Partikel weniger als 10%, insbesondere weniger als 5%, vorzugsweise zwischen 2% und 3% beträgt.

Die vorliegende Erfindung löst die Aufgabe ebenfalls durch Verwendung der aushärtbaren Gießmasse gemäß einem der Ansprüche 1-5 zur Herstellung eines Kunststoffformteils für den Küchen- und/oder Sanitärbereich, insbesondere von Küchenspülen und Arbeitsplatten für Küchen.

Die vorliegende Erfindung löst die Aufgaben ebenfalls durch ein Kunststoffformteil für den Küchen- und/oder Sanitärbereich, insbesondere eine Küchenspüle oder eine Küchenarbeitsplatte, hergestellt unter Verwendung der aushärtbaren Gießmasse gemäß einem der Ansprüche 1-5.

Einer der damit erzielten Vorteile ist, dass sich damit die Reinigbarkeit von Oberflächen von Kunststoffformteilen verbessern lässt: Durch Verwendung expandierbarer Mikrozellen in sehr geringer Einsatzkonzentration konnte überraschenderweise festgestellt werden, dass sich die Reinigungsarbeit mit einem standardisierten Testschmutz verbessern lässt. Mit anderen Worten konnte eine Verminderung der benötigten Reinigungszyklen zur Erreichung eines bestimmten Verschmutzungsgrades beispielsweise um mehr als 25 % gegenüber Materialproben ohne expandierbare Mikrozellen erreicht werden. Durch den Gehalt der aushärtbaren Gießmasse an granularen mineralischen Partikeln ist sichergestellt, dass mit ihr Kunststoffformteile mit einer strukturierten Oberfläche, beispielsweise einer Granitdekoroberfläche erhalten werden können. Trotz der Verwendung expandierbarer Mikrozellen in der aushärtbaren Gießmasse bleibt so die Strukturierung von Oberflächen im Wesentlichen erhalten, sodass die mit der Strukturierung verbundene optische Attraktivität, beispielsweise die Ähnlichkeit einer Granitdekor-Oberfläche mit natürlichem Granit, weitestgehend erhalten bleibt.

Weitere Merkmale, Vorteile und weitere Ausführungsformen der Erfindung sind im Folgenden beschrieben oder werden dadurch offenbar.

Gemäß einer vorteilhaften Weiterbildung beträgt der zweite Anteil mindestens 0,15 Gewichtsprozent. Damit werden die Kosten für die Bereitstellung der aushärtbaren Gießmasse vermindert ohne dass sich die Reinigbarkeit derselben verschlechtert.

Gemäß einer weiteren vorteilhaften Weiterbildung sind die expandierbaren Mikrozellen thermoplastisch ausgebildet. Vorteil hiervon ist, dass damit auf einfache Weise während des Herstellens des Kunststoffformteils eine Expansion der Mikrozellen aufgrund der Temperaturabhängigkeit, insbesondere durch Erhitzen, ermöglicht wird.

Gemäß einer weiteren vorteilhaften Weiterbildung sind die expandierbaren Mikrozellen kugelförmig ausgebildet. Mittels der Kugelform kann eine gleichmäßige Expandierbarkeit und eine homogene Verteilung der Mikrozellen in der aushärtbaren Gießmasse ermöglicht werden.

Gemäß einer weiteren vorteilhaften Weiterbildung beträgt der mittlere Durchmesser der kugelförmigen Mikrozellen zwischen 10 µm und 30 µm, vorzugsweise zwischen 15 µm und 25 µm. Dies ermöglicht eine weitere Verbesserung der Reinigbarkeit ohne die optische Strukturierung der Oberfläche zu beeinträchtigen.

Gemäß einer weiteren vorteilhaften Weiterbildung beträgt die mittlere Dichte der expandierbaren Mikrozellen weniger als 30 kg/Kubikmeter, insbesondere weniger als 20 kg/Kubikmeter, vorzugsweise weniger als 15 kg/Kubikmeter, insbesondere weniger als 10 kg/Kubikmeter. Mikrozellen einer derartigen Dichte bleiben in der aushärtbare Gießmasse, deren Bindemittel üblicherweise eine größere Dichte aufweist, nach einem Überführen der aushärtbaren Gießmasse in eine Gießform zur Herstellung eines Kunststoffformteils im Wesentlichen gleichmäßig verteilt. Mit anderen Worten wird eine einfache Herstellbarkeit eines Kunststoffformteils mittels der aushärtbaren Gießmasse ermöglicht.

Gemäß einer weiteren vorteilhaften Weiterbildung weisen die expandierbaren Mikrozellen ein eingeschlossenes Hohlraumvolumen von zumindest 20%, vorzugsweise zumindest 30 %, insbesondere zumindest 50 % zum Gesamtvolumen einer Mikrozelle auf. Damit wird eine ausreichende Expandierbarkeit der Mikrozellen sichergestellt.

Die Bindemittelmaterialzusammensetzung weist zumindest einen Anteil eines flüssigen monomeren Acrylats auf. Vorteil hiervon ist, dass dieses bei der Herstellung eines Kunststoffformteils unter Härtung zu einem Polyacrylat polymerisierbar ist. Zur Erhöhung der Viskosität der aushärtbaren Gießmasse kann dem monomeren Acrylat ein Anteil einer präpolymerisierten Acrylatkomponente zugegeben werden, beispielsweise kann zu dem Monomer Methylmethacrylat präpolymerisiertes Polymethylmethacrylat PMMA hinzugefügt werden.

Gemäß einer weiteren vorteilhaften Weiterbildung weist das Material der mineralischen Partikel silikatische und/oder Aluminiumhydroxid-basierte Zusammensetzungen auf. Beispielsweise können silikatische Füllstoffmaterialien Glas, Quarz, Cristobalit oder dergleichen umfassen. Aluminiumhydroxid-basierte Füllstoffmaterialien können beispielsweise Aluminiumtrihydrat umfassen.

Die Füllstoffmaterialzusammensetzung weist einen dritten Anteil einer Peroxidmischung auf. Vorteil hiervon ist, dass eine einfache Steuerbarkeit der Polymerisation bei der Herstellung des Kunststoffformteils ermöglicht wird.

Die aushärtbare Gießmasse weist zumindest zwei unterschiedliche Arten granularer, mineralischer Partikel auf. Vorteil hiervon ist die erhöhte Flexibilität hinsichtlich der Ausbildung in der strukturierten Oberfläche.

Das Verhältnis des Gewichtsanteils an expandierbaren Mikrozellen und des Gewichtsanteils beträgt zumindest einer Art der zumindest zwei Arten granularischer Partikel weniger als 10%, insbesondere weniger als 5%, vorzugsweise zwischen 2% und 3%.

Damit wird eine wesentliche Erhöhung der Reinigbarkeit der Oberfläche von Kunststoffformteilen erreicht, ohne dass wesentliche Eigenschaften bzw. die wesentliche Zusammensetzung der aushärtbaren Gießmasse verändert werden muss und so beispielsweise in aufwendiger Weise der Herstellungsprozess angepasst werden muss.

Weitere wichtige Merkmale und Vorteile der Erfindung ergeben sich aus den Unter-ansprüchen und aus der nachfolgenden Erläuterung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung werden in der nachfolgenden Beschreibung näher erläutert.

Es wurde gefunden, dass bei der erfindungsgemäßen Verwendung expandierbarer Mikrozellen, insbesondere expandierbarer Mikrokugeln, eine Verbesserung der Reinigbarkeit der Oberfläche, insbesondere der Sichtseite eines Kunststoffformteils, ermöglicht wird.

### Vergleichsbeispiel 1

Es wird eine aushärtbare Gießmasse hergestellt, in dem ein Bindemittelmaterial mit einem Füllstoffmaterial versetzt wird. Das Bindemittelmaterial wird erhalten, durch Lösen von PMMA in MMA, derart, dass das Bindemittelmaterial 19 Gewichtsprozent PMMA und 81% Gewichtsprozent MMA aufweist. Zusätzlich werden Stearinsäure und Trimethylolpropantrimethacrylat (TRIM) als Vernetzer zugesetzt.

Das Füllstoffmaterial umfasst verschiedene Typen des granularen Quarzmaterials Granucol^{®} (Firma Gebrüder Dorfner GmbH & Co., Hirschau) sowie Wollastonit (Firma Quarzwerke, Frechen). Es wurden die folgenden Typen von Granucol ^{®} und Wollastonit eingesetzt:
Granucol ^{®} erdbraun 4/8 (mittlere Partikelgröße 570 Mikrometer)
Granucol ^{®} weiß 1/8 (mittlere Partikelgröße 570 Mikrometer)
Granucol ^{®} weiß 2/9 (mittlere Partikelgröße 330 Mikrometer)
Wollastonit (mittlere Nadellänge 1 bis 25 Mikrometer)

Durch die Verwendung verschiedener Granucol^{®}-Typen, die insbesondere unterschiedlich gefärbt sind, kann eine ansprechende Granitdekor-Optik erzielt werden. Der Zusatz von Wollastonit verbessert die mechanischen Eigenschaften der mit der aushärtbaren Gießmasse herstellbaren Kunststoffformteile und verringert insbesondere das Auftreten sogenannter Auskocher auf den Formteilen, wie sie durch lokale Überhitzungen während des Härtungsprozesses auftreten können. Die Vorteile des Einsatzes von Wollastonit sind in der EP 1 207 180 A1 beschrieben, welche hiermit durch expliziten Verweis einbezogen ist.

Das Füllstoffmaterial wird nun dem Bindemittelmaterial zugegeben und mit diesem homogen vermischt. Weiterhin wird der aushärtbaren Gießmasse eine Peroxidmischung zugesetzt zur Einstellung der Polymerisation und die Aushärtung der Gießmasse. Eine derartige Peroxidmischung kann beispielsweise Di-(4-tert.-butylcyclohexyl)peroxydicarbonat und/oder Dilauroylperoxid umfassen. Alternativ oder zusätzlich umfasst das Bindemittel einen oder mehrere Vernetzer. Als Vernetzer kommt beispielsweise Stoffe aus der Gruppe der aliphatischen oder aromatischen di-, tri- oder multifunktionellen Arcylate oder Methacrylate und/oder der Epoxy-Acrylate oder Methacrylate und/oder der aliphatischen oder aromatischen di-, tri- oder multifunktionellen Urethan Acrylate oder Methacrylate und/oder di-, tri- oder multifunktionellen Polyester Acrylate oder Methacrylate und/oder der di-, tri- oder multifunktionellen Silikon Acrylate oder Methacrylate, Silikon Urethan Acrylate oder Methacrylate und Silikon Polyester Acrylate oder Methacrylate oder Kombinationen hiervon in Frage.

Die Zusammensetzung der aushärtbaren Gießmasse gemäß Vergleichsbeispiel 1 ist in der folgenden Tabelle 1 wiedergegeben, wobei die Gehalte der einzelnen Komponenten in Gewichtsprozent angegeben sind.

**Tabelle 1**

| | |
|---|---|
| Bindemittel (PMMA ,19 Gewichtsprozentin MMA 81 Gewichtsprozent | 24,3 |
| Trimethylolpropantrimethacrylat | 0,50 |
| Peroxidmischung | 0,60 |
| Wollastonit | 5,60 |
| Granucol ^{®} erdbraun 4/8 | 10,0 |
| Granucol ^{®} weiß 1/8 | 41,0 |
| Granucol ^{®} weiß 2/9 | 18,0 |

Die Peroxidmischung besteht im Wesentlichen aus einer Mischung von Dilauroylperoxid und Di-(4-tert.-butylcyclohexyl)peroxydicarbonat im Gewichtsverhältnis 1,5:1.

Die aushärtbare Gießmasse wird nun in eine Gießform für eine Küchenspüle gegeben und unter Wärmeeinwirkung polymerisiert.

An einem aus der so erhaltenen Küchenspüle entnommenen Probestück - im folgenden kurz Probe - wird die Sichtseite nun einer definierten Verschmutzung und einer definierten Reinigung unterzogen: Im Zusammenhang mit der Bewertung der Reinigungsfreundlichkeit, oder aber auch, anders ausgedrückt, der Verschmutzungsneigung der gebildeten Kunststoffformkörper, wird ein synthetischer Modellschmutz verwendet und das Abreinigen dieses Schmutzes unter definierten Bedingungen durchgeführt.

Als Modellschmutz wird folgende Zusammensetzung verwendet:

| | |
|---|---|
| 7 Gew. % | Spezialschwarz 4, Ruß (Degussa AG) |
| 40 Gew. % | Prozessöl 310 (ESSO AG) |
| 17 Gew. % | Tricaprylin (Fa. Fluka, Best.-Nr.: 91040) |
| 36 Gew. % | Benzin, Kp. 65/100 °C (Fluka, Best.-Nr.: 12270) |

Die Versuchsdurchführung im Einzelnen:

### Vorbereitung:

Der Testschmutz wird vor der Anwendung ca. 1h mit Hilfe eines Magnetrührers aufgerührt. Bei Benutzung eines neuen Flachpinsels muss dieser vorher mit dem Testschmutz gesättigt werden. Nach der Herstellung eines neuen Testschmutzes wird insbesondere auch ein neuer Pinsel verwendet. Diese Sättigung des Pinsels erfolgt, indem einmalig eine vorgebbare Menge Testschmutz auf einer Folie verstrichen wird und diesen 1h einwirken lässt. Von einem Schwamm wird die Scheuerseite mit einem Messer abgeschnitten und von der weichen Seite wird ein Kreis mit einem Durchmesser von ca. 8 cm zurechtgeschnitten. Nach jedem einzelnen abgeschlossenen Abreinigungsversuch wird ein neuer Schwamm verwendet und entsprechend wie beschrieben vorbereitet.

### Durchführung:

Nach der Vorbereitung der Probe werden 5 Tropfen des Testschmutzes auf ein Uhrglas gegeben und mit einem mit Testschmutz gesättigten Pinsel mittig auf die Probe im Kreuzzug verstrichen, so dass eine quadratische Fläche mit einer Kantenlänge von ca. 4 cm überdeckt wird. Dann werden die Proben für 15 min. bei 40°C im Trockenschrank gelagert und danach umgehend mit heißem Wasser mit einer Temperatur von ca. 65°C - 70°C unter einem Anstellwinkel von ca. 80° aus einem nahe der Probenoberfläche, d.h. mit einem Abstand von ca. 10 cm, bewegten Schlauch mit erhöhtem Druck, insbesondere durch manuelles Zusammendrücken des Schlauches, abgespült, bis sich kein Testschmutz mehr erkennbar herunterspülen lässt.

Anschließend werden die Probenstücke mit VE-Wasser abgespült. Danach erfolgt die Reinigung in einer Reinigungseinrichtung mit einem Spülschwamm der Marke Scotch-Brite bei dem vorher die Vliesseite abgeschnitten wurde. Die Schnittfläche des für die Reinigungseinrichtung zurechtgeschnittenen Schwammstückes wird zur Probe orientiert, mit doppelseitigem Klebeband an einer drehbaren Kunststoffscheibe befestigt und mit ca. 5 ml einer 5%igen und zuvor aufgerührten VISS-Scheuermilchsuspension befeuchtet.

Auf die zu reinigende Probe wird zusätzlich ca. 1 ml der 5%igen VISS-Scheuermilchsuspension gegeben und anschließend die Schwammaufnahme der Reinigungseinrichtung mit 2 kg belastet, was mit einer unter der Probe angeordneten Waage, welche sich auf einer Laborhebebühne befindet, kontrolliert bzw. überwacht wird. Nach jeweils 10 Umdrehungen, bei einer Umlaufgeschwindigkeit von 60 U/min, wird der Reinigungszustand nach vorsichtigem Abtupfen der Reinigungsrückstände mit einem weichen Tuch visuell überprüft. Ist noch keine vollständige Abreinigung der Test- bzw. Rußanschmutzung erreicht, so wird erneut 1 ml der 5%igen Scheuermilchdispersion aufgetragen und die nächsten 10 Reinigungszyklen durchgeführt bis sich visuell kein Testschmutz mehr auf der Probe befindet bzw. erkennbar ist. Spätestens nach 100 Umdrehungen wird der Versuch abgebrochen.

Auf Basis der des zuvor beschriebenen Testverfahrens ergaben sich folgende Ergebnisse in Abhängigkeit der benötigten Umdrehungsanzahlen bis zur vollständigen Abreinigung des Testschmutzes:
Benötigte Anzahl an Umdrehungen (Mittelwert aus 8 Einzelprüfungen) gemäß dem Vergleichsbeispiel (ohne Expancel^{®}): 31,25

### Beispiel 1

Es wird eine erfindungsgemäße Gießmasse hergestellt, die in ihrer Zusammensetzung der aushärtbaren Gießmasse gemäß Vergleichsbeispiel 1 größtenteils entspricht, wobei eine Menge an expandierbaren Mikrokugeln (Expancel^{®} der Firma Akzo Nobel NV) im Austausch gegen eine entsprechende Menge Wollastonit zugesetzt wird. Die restlichen Gehälter an Materialen werden gleich gehalten. In der so erhaltenen aushärtbaren Gießmasse bilden die Granucol ^{®}-Typen und Wollastonit einen ersten Anteil an Füllstoffmaterial und die expandierbaren Mikrozellen einen zweiten Anteil. Es wird dabei der folgende Typ expandierbarer Mikrozellen eingesetzt:
Expancel^{®} 043DU80 (mittlerer Durchmesser d50: 16-24 Mikrometer, spezifische Dichte ≤10 kg/m³)

Die Wandstärke der expandierbaren Mikrozellen beträgt ca. 2 Mikrometer. Der Durchmesser der Mikrozellen ist dabei um den Faktor 3 oder mehr expandierbar auf Grund von Temperatureinwirkung, wobei sich die Wandstärke dann hierbei um den Faktor 20 verringert. Das Innere der Mikrozellen umfasst dabei Kohlenwasserstoff.

Die Zusammensetzung der aushärtbaren Gießmasse gemäß Beispiel 1 ist in der folgenden Tabelle 2 wiedergegeben, wobei die Gehalte der einzelnen Komponenten in Gewichtsprozent angegeben sind, jeweils bezogen auf 100 kg aushärtbare Gießmasse:

**Tabelle 2**

| | |
|---|---|
| Bindemittel (PMMA ,19 Gewichtsprozent in MMA 81 Gewichtsprozent) | 24,3 |
| Trimethylolpropantrimethacrylat | 0,50 |
| Peroxidmischung | 0,60 |
| Expancel 043DU80 | 0,15 |
| Wollastonit | 5,45 |
| Granucol ^{®} erdbraun 4/8 | 10,0 |
| Granucol ^{®} weiß 1/8 | 41,0 |
| Granucol ^{®} weiß 2/9 | 18,0 |

Die Peroxidmischung besteht im Wesentlichen aus einer Mischung von Dilauroylperoxid und Di-(4-tert.-butylcyclohexyl)peroxydicarbonat im Gewichtsverhältnis 1,5:1.

Wie für die aushärtbare Gießmasse gemäß Vergleichsbeispiel beschrieben, wird mit der aushärtbaren Gießmasse gemäß Beispiel 1 jeweils eine Küchenspüle hergestellt und anschließend ein Probestück der Küchenspüle entnommen. Aus dem so erhaltenen der Küchenspüle entnommenen Probestück wird die Sichtseite nun einer definierten Verschmutzung und einer definierten Reinigung mit der oben beschriebenen Vorbereitung und mittels der oben beschriebenen Reinigungseinrichtung unterzogen.

Auf Basis der des zuvor beschriebenen Testverfahrens ergaben sich folgende Ergebnisse in Abhängigkeit der benötigten Umdrehungsanzahlen bis zur vollständigen Abreinigung des Testschmutzes:
Benötigte Anzahl an Umdrehungen (Mittelwert aus 8 Einzelprüfungen) gemäß dem erfindungsgemäßen Beispiel 1 (mit Expancel^{®}): 22,50

Das Ergebnis zeigt, dass der Zusatz expandierbarer Mikrozellen eine deutliche Verminderung der notwendigen Reinigungszyklen bewirkt, insbesondere mindestens um den Faktor 1,3, wobei im oben beschriebenen Vergleich eine Reduktion um den Faktor 31,25 / 22,50 = 1,39 erzielt wurde. Die mit der aushärtbaren Gießmasse gemäß einer Ausführungsform der vorliegenden Erfindung hergestellten Küchenspülen weisen im Vergleich zu der im Vergleichsbeispiel erhaltenden aushärtbaren Gießmasse keinerlei Beeinträchtigungen in ihrer Granitdekor-Optik auf.

Der Effekt der verbesserten Reinigbarkeit der Oberfläche tritt somit bei dem erfindungsgemäßen Einsatz expandierbarer Mikrozellen auf.

Zusammenfassend weist zumindest eine der Ausführungsformen der Erfindung zumindest einen der folgenden Vorteile auf:
- Verbesserte Reinigbarkeit der Oberfläche von Kunststoffformteilen
- Sehr geringe Einsatzmenge des benötigten Wirkungsadditivs (Expancel^{®}) und damit geringe Kosten bei gleichzeitig wesentlich verbesserte Reinigbarkeit
- Hohe Flexibilität hinsichtlich der optischen Gestaltung von Oberflächen

Obwohl die vorliegende Erfindung anhand bevorzugter Ausführungsbeispiele beschrieben wurde, ist sie nicht darauf beschränkt, sondern auf vielfältige Weise modifizierbar.

## Patentansprüche

1. Aushärtbare Gießmasse zur Herstellung von Kunststoffformteilen für den Küchen- und/oder Sanitärbereich, insbesondere von Küchenspülen und Arbeitsplatten für Küchen,
umfassend eine Gießmasse mit einer Bindemittelmaterialzusammensetzung und einer Füllstoffmaterialzusammensetzung, wobei die Füllstoffmaterialzusammensetzung zumindest einen ersten Anteil an granularen mineralischen Partikeln aufweist,
**dadurch gekennzeichnet, dass**
die Füllstoffmaterialzusammensetzung einen zweiten Anteil an expandierbaren Mikrozellen von mindestens 0,10 Gewichtsprozent und weniger als 0,175 Gewichtsprozent bezogen auf die Gießmasse aufweist und wobei die Füllstoffmaterialzusammensetzung einen dritten Anteil einer Peroxidmischung aufweist und dass die Bindemittelmaterialzusammensetzung zumindest einen Anteil eines flüssigen monomeren Acrylats aufweist und wobei die aushärtbare Gießmasse zumindest zwei unterschiedliche Arten granularer mineralischer Partikel aufweist, und wobei das Verhältnis des Gewichtsanteils an expandierbaren Mikrozellen und des Gewichtsanteils zumindest einer Art der zumindest zwei Arten granularischer Partikel weniger als 10%, insbesondere weniger als 5%, vorzugsweise zwischen 2% und 3% beträgt.

2. Aushärtbare Gießmasse gemäß Anspruch 1, **dadurch gekennzeichnet, dass** der zweite Anteil mindestens 0,15 Gewichtsprozent beträgt.

3. Aushärtbare Gießmasse gemäß einem der Ansprüche 1-2, **dadurch gekennzeichnet, dass** die expandierbaren Mikrozellen thermoplastisch ausgebildet sind.

4. Aushärtbare Gießmasse gemäß einem der Ansprüche 1-3, **dadurch gekennzeichnet, dass** die expandierbaren Mikrozellen kugelförmig ausgebildet sind.

5. Aushärtbare Gießmasse gemäß einem der Ansprüche 1-4, **dadurch gekennzeichnet, dass** das Material der mineralischen Partikel silikatische und/oder Aluminiumhydroxid-basierte Zusammensetzungen aufweist.

6. Verwendung der aushärtbaren Gießmasse gemäß einem der Ansprüche 1-5 zur Herstellung eines Kunststoffformteils für den Küchen- und/oder Sanitärbereich, insbesondere von Küchenspülen und Arbeitsplatten für Küchen.

7. Kunststoffformteil für den Küchen- und/oder Sanitärbereich, insbesondere eine Küchenspüle oder eine Küchenarbeitsplatte, hergestellt unter Verwendung der aushärtbaren Gießmasse gemäß einem der Ansprüche 1-5.

## Claims

1. Curable casting compound for producing moulded plastics material components for the kitchen and/or sanitary sector, in particular kitchen sinks and worktops for kitchens,
comprising a casting compound having a binding agent material composition and a filling material composition, wherein the filling material composition has at least a first proportion of granular mineral particles,
**characterised in that**
the filling material composition has a second proportion of expandable microcells of at least 0.10 % by weight and less than 0.175 % by weight with respect to the casting compound, and wherein the filling material composition has a third proportion of a peroxide admixture and **in that** the binding agent material composition has at least a proportion of a liquid monomer acrylate and wherein the curable casting compound has at least two different types of granular mineral particles, and wherein the ratio of the weight proportion of expandable microcells and the weight proportion of at least one type of the at least two types of granular particles is less than 10 %, in particular less than 5 %, preferably between 2 % and 3 %.

2. Curable casting compound according to claim 1, **characterised in that** the second proportion is at least 0.15 % by weight.

3. Curable casting compound according to either claim 1 or 2, **characterised in that** the expandable microcells are constructed in a thermoplastic manner.

4. Curable casting compound according to any one of claims 1 to 3, **characterised in that** the expandable microcells are constructed in a spherical manner.

5. Curable casting compound according to any one of claims 1 to 4, **characterised in that** the material of the mineral particles has siliceous and/or aluminium hydroxide-based compositions.

6. Use of the curable casting compound according to any one of claims 1 to 5 for producing a moulded plastics material component for the kitchen and/or sanitary sector, in particular kitchen sinks and worktops for kitchens.

7. Plastics material component for the kitchen and/or sanitary sector, in particular a kitchen sink or kitchen worktop, produced using the curable casting compound according to any one of claims 1 to 5.

## Revendications

1. Matière à couler durcissable pour la fabrication de pièces moulées en matière plastique pour le domaine de la cuisine et/ou des sanitaires, plus particulièrement pour des éviers et des plans de travail pour des cuisines,
comprenant une matière à couler avec une composition de matériau liant et une composition de matériau de remplissage, dans lequel la composition de matériau de remplissage comprend au moins une première part de particules minérales granulaires,
**caractérisée en ce que**
la composition de matériau de remplissage comprend une deuxième part de micro-cellules expansibles d'au moins 0,10 % en poids et inférieure à 0,175 % en poids par rapport à la matière à couler et dans lequel la composition de matériau de remplissage comprend une troisième part d'un mélange de peroxyde et **en ce que** la composition de matériau liant comprend au moins une part d'un acrylate monomère liquide et dans lequel la matière à couler durcissable comprend au moins deux type différents de particules minérales granulaires et dans lequel le rapport entre la part en poids de micro-cellules expansibles et la part en poids d'au moins un type des au moins deux types de particules minérales granulaires est inférieure à 10 %, plus particulièrement inférieure à 5 %, de préférence entre 2 % et 3 %.

2. Matière à couler durcissable selon la revendication 1, **caractérisée en ce que** la deuxième part représente au moins 0,15 % en poids.

3. Matière à couler durcissable selon l'une des revendications 1 à 2, **caractérisée en ce que** les micro-cellules expansibles sont conçues de façon à être thermoplastiques.

4. Matière à couler durcissable selon l'une des revendications 1 à 3, **caractérisée en ce que** les micro-cellules expansibles présentent la forme de billes.

5. Matière à couler durcissable selon l'une des revendications 1 à 4, **caractérisée en ce que** le matériau des particules minérales comprend des compositions de silicates et/ou des compositions à base d'hydroxyde d'aluminium.

6. Utilisation de la matière à couler durcissable selon l'une des revendications 1 à 5 pour la fabrication d'une pièce moulée en matière plastique pour le domaine de la cuisine et/ou des sanitaires, plus particulièrement pour des éviers et des plans de travail pour des cuisines.

7. Pièce moulée en matière plastique pour le domaine de la cuisine et/ou des sanitaires, plus particulièrement un évier pour un plan de travail de cuisine, fabriquée en utilisant la matière à couler durcissable selon l'une des revendications 1 à 5.
